# EUROPEAN PATENT APPLICATION

(11) **EP 4 521 480 A1**
(43) Date of publication of application: **12.03.2025**
(21) Application number: 23873065.9
(22) Date of filing: 26.09.2023
(51) Int. Cl.: H01M 4/13, H01M 4/525, H01M 4/505, H01M 4/48, H01M 4/587, H01M 10/0525, H01M 4/02

(54) **POSITIVE ELECTRODE COMPOSITION, POSITIVE ELECTRODE, AND SECONDARY BATTERY**

(30) Priority: 30.09.2022 KR 20220125359; 25.09.2023 KR 20230127942
(71) Applicant: LG Energy Solution, Ltd., Seoul 07335 (KR)
(72) Inventor: BAEK, Sora, Daejeon 34122 (KR); KIM, Minsu, Daejeon 34122 (KR); KIM, Shulkee, Daejeon 34122 (KR); PARK, Kyutae, Daejeon 34122 (KR); PIAO, Lilin, Daejeon 34122 (KR); YOO, Kwang Ho, Daejeon 34122 (KR); LEE, Gyeongseop, Daejeon 34122 (KR); JUNG, Wonhee, Daejeon 34122 (KR)
(74) Representative: Plasseraud IP
(86) International application number: PCT/KR2023/014747
(87) International publication number: WO 2024/071950

(57) **Abstract**

The present invention relates to a positive electrode composition, a positive electrode comprising same, and a secondary battery, the positive electrode composition comprising: first positive electrode active material in the form of discrete particles; second positive electrode active material with particle diameter greater than the first positive electrode active material and particle strength of 150 Mpa or greater; a binder; and conductive material.

## Description

### [Technical Field]

This application claims priority to and the benefit of Korean Patent Application No. 10-2022-0125359 filed in the Korean Intellectual Property Office on September 30, 2022, and Korean Patent Application No. 10-2023-0127942 filed in the Korean Intellectual Property Office on September 25, 2023, the entire contents of which are incorporated herein by reference.

The present invention relates to a positive electrode composition, a positive electrode, and a secondary battery.

### [Background Art]

A secondary battery is universally applied not only to a portable device, but also to an electric vehicle (EV) or a hybrid electric vehicle (HEV) that is driven by an electrical driving source.

The secondary battery is attracting attention as a new energy source to improve eco-friendliness and energy efficiency because of the primary advantage that the use of fossil fuels is dramatically reduced as well as the secondary advantage that no by-products are generated from the use of energy.

In general, a secondary battery includes a positive electrode, a negative electrode, a separator interposed between the positive electrode and the negative electrode, an electrolyte, and the like. In addition, the electrode such as a positive electrode and a negative electrode may have an electrode active material layer provided on a current collector. As utilization of the secondary battery increases, various battery performances are required. For example, for development of a high-capacity battery, attempts are being made to apply a silicon-based active material to a negative electrode. However, the silicon-based active material has a major problem of high initial irreversibility. For improvement in battery performance, attempts are being made to adjust components of the positive electrode or negative electrode or to add an additive. However, a wrong combination of materials may have an adverse effect on the performance of the final battery. Accordingly, research on improving battery performance with a combination of materials for a positive electrode or negative electrode is necessary.

### [Detailed Description of the Invention]

### [Technical Problem]

The present invention is intended to provide a positive electrode composition capable of not only providing an irreversible capacity of a negative electrode when used with the negative electrode using a silicon-based active material, but also implementing an electrode with a high energy density and improving a problem of gas generation due to a reaction with an electrolyte solution, a positive electrode, and a secondary battery including the same.

### [Technical Solution]

An exemplary embodiment of the present invention provides a positive electrode composition including: a first positive electrode active material in the form of a single particle; a second positive electrode active material having a particle diameter larger than that of the first positive electrode active material and a particle strength of 150 MPa or higher; a binder; and a conductive material.

Another exemplary embodiment of the present invention provides a positive electrode for a secondary battery including: a current collector; and a positive electrode active material layer provided on the current collector and including the positive electrode composition according to the exemplary embodiment described above.

Still another exemplary embodiment of the present invention provides a secondary battery including the positive electrode according to the exemplary embodiment described above, a negative electrode, and a separator.

According to a yet another exemplary embodiment of the present invention, the negative electrode includes a silicon-based active material.

### [Advantageous Effects]

According to the exemplary embodiments described in the present specification, the first positive electrode active material in the form of a single particle and the second positive electrode active material with high particle strength are used as the positive electrode active material, so that not only high density but also low efficiency can be achieved. Specifically, with the low efficiency characteristics, when used with a negative electrode using a silicon-based active material, the irreversible capacity of the negative electrode can be provided. In addition, the first and second positive electrode active materials can suppress generation of fine powders due to particle breakage during rolling, thereby preventing an increase in specific surface area and improving a problem of gas generation due to a reaction with an electrolyte solution. Furthermore, since the problem during rolling can be improved as described above, the rolling density can be increased, thereby not only implementing a high energy density, but also reducing a thickness of the positive electrode to improve rapid charging performance.

### [Best Mode]

Hereinafter, the present invention will be described in more detail for better understanding of the present invention. The present invention may be implemented in various different forms, and is not limited to the exemplary embodiments described herein. The terms or words used throughout the specification and the claims should not be construed as being limited to their ordinary or dictionary meanings, but construed as having meanings and concepts consistent with the technical idea of the present invention, based on the principle that an inventor may properly define the concepts of the words or terms to best explain the invention.

It will be further understood that the terms "comprises", "includes" or "have" when used in the present specification specify the presence of stated features, integers, steps, constitutional elements and/or combinations thereof, but do not preclude the presence or addition of one or more other features, integers, steps, constitutional elements, and/or combinations thereof.

Further, it will be understood that when an element such as a layer is referred to as being "on" another element, it can be "directly on" the other element or an intervening element may also be present. In contrast, when an element is referred to as being "directly on" another element, there are no intervening elements present. Further, when an element is referred to as being "on" a reference portion, the element is positioned above or below the reference portion, and it does not necessarily mean that the element is positioned "above" or "on" in a direction opposite to gravity.

In the present specification, the particle diameter refers to an average particle diameter indicated by D₅₀. D₅₀ can be defined as a particle size at 50% of a particle size distribution, and can be measured using a laser diffraction method. For example, a method for measuring an average particle diameter (D₅₀) of the positive electrode active material may include dispersing particles of the positive electrode active material in a dispersion medium, introducing the dispersion into a commercially available laser diffraction particle size measuring device (e.g., Microtrac MT 3000), irradiating the dispersion with ultrasonic waves of approximately 28 kHz with an output of 60 W, and then calculating an average particle diameter (D₅₀) corresponding to 50% of the cumulative volume in the measuring device.

In the present specification, 'primary particle' refers to a particle that does not appear to have grain boundaries when observed at a field of view of 5,000 to 20,000 times using a scanning electron microscope.

In the present specification, 'secondary particle' refers to a particle formed by agglomeration of the primary particles.

In the present application, the single particle is a term used to distinguish the same from a positive electrode active material particle in the form of a secondary particle resulting from agglomeration of tens to hundreds of primary particles generally used in the related art, and is a concept including a single particle consisting of one primary particle and an agglomerate particle of 10 or less primary particles.

In the present specification, when referring to 'particle', it may mean any one or all of a single particle, a secondary particle, and a primary particle.

A positive electrode composition according to an exemplary embodiment of the present specification includes a first positive electrode active material in the form of a single particle; a second positive electrode active material having a particle diameter larger than that of the first positive electrode active material and a particle strength of 150 MPa or higher; a binder; and a conductive material.

In the present specification, for convenience, the first positive electrode active material in the form of a single particle may be referred to as a small-particle diameter positive electrode active material and the second positive electrode active material having a particle diameter larger than that of the first positive electrode active material and a particle strength of 150 MPa or higher may be referred to as a large-particle diameter positive electrode active material.

In the above exemplary embodiment, by using a single particle form as the small-particle diameter positive electrode active material, a lithium pathway can be lengthened to reduce efficiency. In addition, by applying single particles with an excellent rolling density, a high-density electrode can be implemented, and by applying single particles with an excellent tap density, a rolling ratio can be improved to suppress generation of fine powders due to particle breakage. According to one example, the first positive electrode active material has a tap density of 2 g/cc or higher, for example, 2 g/cc or higher and 30 g/cc or less. According to one example, the first positive electrode active material has a rolling density of 3 g/cc or higher, for example, 3 g/cc or higher and 30 g/cc or less.

The tap density is an apparent density of particles obtained by vibration under certain conditions, and may be measured using a tap density tester (KYT-5000, Seishin). The rolling density may be measured as a rolling density during rolling with the force of 2,000 kgf/cm² using a powder resistance characteristic device HPRM-1000 (HAN TECH CO.).

In the above exemplary embodiment, the second positive electrode active material has a particle diameter larger than that of the first positive electrode active material and a particle strength of 150 MPa or higher. The particle strength of the second positive electrode active material may be preferably 180 MPa or higher. The higher the particle strength of the second positive electrode active material is, the more advantageous it is. However, for example, the particle strength may be 600 MPa or less.

The particle strength refers to a force when particles are broken while increasing a compressive force after putting the particles on a plate, and can be measured using a Micro Compression Testing Machine (Shimadzu, MCT-W500).

According to an exemplary embodiment, the particle strength of the first positive electrode active material is 150 MPa or higher, preferably 180 MPa or higher and less than 250 MPa. If the particle strength of the first positive electrode active material is 250 MPa or higher, rolling characteristics may be deteriorated.

According to an exemplary embodiment, the second positive electrode active material may be in the form of a secondary particle, in which case a particle diameter of the secondary particle is larger than a particle diameter of a single particle of the first positive electrode active material. Even when the second positive electrode active material is a secondary particle, the particle strength is 150 MPa or higher as described above, so even when rolling an electrode mixed with the first positive electrode active material in the form of a single particle, particle breakage is reduced to suppress the generation of fine powders, thereby reducing generation of gas. The particle strength of the large-particle diameter positive electrode active material can be adjusted by controlling firing conditions, such as firing time or temperature, when manufacturing the positive electrode active material.

According to an exemplary embodiment, D₅₀ of the first positive electrode active material may be 1 µm to 10 µm, and D₅₀ of the second positive electrode active material may be 8 µm to 20 µm. The second positive electrode active material may have a particle diameter 3 µm to 15 µm, for example, 5 µm to 10 µm larger than that of the first positive electrode active material. When the difference in particle diameter between the first and second positive electrode active materials is 3 to 15 µm, particle breakage is improved, which is advantageous for improving the generation of fine powders and gas.

According to an exemplary embodiment, a weight ratio of the first positive electrode active material and the second positive electrode active material may be 1:9 to 9:1, specifically 3:7 to 7:3. In particular, when the content ratio of the first and second positive electrode active materials is 3:7 to 7:3, the rolling characteristics of the electrode are improved, which is advantageous for implementing a high-density electrode.

According to an exemplary embodiment, the first positive electrode active material and the second positive electrode active material may each include a lithium composite transition metal compound including nickel (Ni) and cobalt (Co). The lithium composite transition metal compound may further include at least one of manganese and aluminum. The lithium composite transition metal compound may include 80 mol% or more, for example, 80 mol% or more and less than 100 mol% of nickel among metals other than lithium. For example, the lithium composite transition metal compound may be a positive electrode active material represented by LiₐNi_{(1-x-y)}CoₓM1_{y}M2_{w}O₂ (1.0≤a≤1.5, 0≤x≤0.2, 0≤y≤0.2, 0≤w≤0.1, 0≤x+y≤0.2, M1 is at least one metal selected from Mn or Al, and M2 is one or more metal elements selected from the group consisting of Ba, Ca, Zr, Ti, Mg, Ta, Nb, and Mo).

According to an exemplary embodiment, one or both of the first and second positive electrode active materials may further include a cobalt oxide layer provided on at least a portion of a surface thereof. A cobalt raw material of the cobalt oxide layer may include a lithium cobalt oxide by reacting with residual lithium on the surface of the active material. In this case, an effect of reducing residual lithium on the surface of the active material can be exhibited and an effect of improving an output due to the excellent lithium ionic conductivity of the lithium cobalt oxide can be exhibited. In addition, the cobalt oxide layer is present on the surface of the active material, making it possible to reduce a side reaction with an electrolyte solution.

According to an additional exemplary embodiment of the present specification, the positive electrode binder may serve to improve adhesion between positive electrode active material particles and adhesive force between positive electrode active material particles and a positive electrode current collector. For the positive electrode binder, those known in the art may be used. Non-limiting examples thereof may include polyvinylidene fluoride (PVDF), polyvinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, various copolymers thereof, and the like, and any one thereof or a mixture of two or more thereof may be used.

The positive electrode binder may be included in an amount of 0.1 part by weight or more and 50 parts by weight or less, for example, preferably 0.3 part by weight or more and 35 parts by weight or less, and more preferably 0.5 part by weight or more and 20 parts by weight or less on the basis of 100 parts by weight of the positive electrode active material layer.

The conductive material included in the positive electrode active material layer is used to impart conductivity to the electrode, and can be used without particular limitation as long as the conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

Specifically, in an exemplary embodiment, the conductive material may include one or more of a single-walled carbon nanotube (SWCNT) and a multi-walled carbon nanotube (MWCNT). The conductive material may be included in an amount of 0.1 part by weight or more and 2 parts by weight or less, for example, preferably 0.3 part by weight or more and 1.5 parts by weight or less, and more preferably 0.5 part by weight or more and 1.2 parts by weight or less on the basis of 100 parts by weight of the composition for a positive electrode active material layer.

According to a further exemplary embodiment of the present specification, there is provided a positive electrode for a secondary battery including: a current collector; and a positive electrode active material layer provided on the current collector and including the above-described positive electrode composition. A thickness of the positive electrode active material layer may be 20 µm or greater and 500 µm less.

According to an exemplary embodiment, fine powder having a particle diameter of 1 µm or less in the positive electrode active material layer is 5 vol% or less, preferably 3 vol% or less, and more preferably 1 vol% or less on the basis of 100 vol% of the positive electrode active material layer. The content of the fine powder in the positive electrode active material layer may be measured by heat-treating a rolled electrode in an air atmosphere at 500°C for 5 hours to remove the conductive material and binder, and obtaining and subjecting only the positive electrode active material to a laser diffraction method. For example, the content may be measured by dispersing lithium composite transition metal oxide powder or positive electrode active material powder in a dispersion medium, introducing the dispersion into a commercially available laser diffraction particle size measuring device (e.g., Microtrac MT 3000), irradiating the dispersion with ultrasonic waves of approximately 28 kHz with an output of 60 W, obtaining a volume-cumulative particle size distribution graph, and then calculating a cumulative volume of 1 µm or less.

The positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and most preferably 98 parts by weight or more and 99.9 parts by weight or less.

The positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 1 to 500 µm, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

An additional exemplary embodiment of the present specification provides a secondary battery including the positive electrode according to the above-described exemplary embodiments, a negative electrode, and a separator.

The negative electrode may include a current collector and a negative electrode active material layer provided on the current collector.

According to an exemplary embodiment, the negative electrode includes a silicon-based active material.

The active material including SiOx (0≤x<2) as the silicon-based active material may be a silicon-based composite particle including SiOₓ (0<x<2) and a pore.

The SiOx (0<x<2) corresponds to a matrix in the silicon-based composite particle. The SiOₓ(0<x<2) may be a form of including Si and SiO₂, and the Si may form a phase. That is, x corresponds to a ratio of the number of O to Si included in the SiOₓ(0<x<2). When the silicon-based composite particle includes the SiOₓ (0<x<2), a discharge capacity of a secondary battery can be improved.

The silicon-based composite particle may further include at least one of an Mg compound and a Li compound. The Mg compound and the Li compound may correspond to a matrix in the silicon-based composite particle.

The Mg compound and/or the Li compound may be present in the SiOx (0<x<2) and/or on a surface of the SiOx (0<x<2). The initial efficiency of the battery can be improved by the Mg compound and/or the Li compound.

The Mg compound may include at least one selected from the group consisting of Mg silicate, Mg silicide, and Mg oxide. The Mg silicate may include at least one of Mg₂SiO₄ and MgSiO₃. The Mg silicide may include Mg₂Si. The Mg oxide may include MgO.

In an exemplary embodiment of the present specification, the Mg element may be included in an amount of 0.1 wt% to 20 wt% or 0.1 wt% to 10 wt% on the basis of 100 wt% of a total of the silicon-based active material. Specifically, the Mg element may be included in an amount of 0.5 wt% to 8 wt% or 0.8 wt% to 4 wt%. When the above range is satisfied, the Mg compound can be included in an appropriate content in the silicon-based active material, so the volume change of the silicon-based active material during charging and discharging of the battery can be easily suppressed, and the discharge capacity and initial efficiency of the battery can be improved.

The Li compound may include at least one selected from the group consisting of Li silicate, Li silicide, and Li oxide. The Li silicate may include at least one of Li₂SiO₃, Li₄SiO₄ and Li₂Si₂O₅. The Li silicide may include Li₇Si₂. The Li oxide may include Li₂O.

In an exemplary embodiment of the present invention, the Li compound may include a form of lithium silicate. The lithium silicate is represented by LiₐSi_{b}O_{c}(2≤a≤4, 0<b≤2, 2≤c≤5) and may be divided into crystalline lithium silicate and amorphous lithium silicate. The crystalline lithium silicate may be present in the silicon-based composite particle in a form of at least one lithium silicate selected from the group consisting of Li₂SiO₃, Li₄SiO₄ and Li₂Si₂O₅, and the amorphous lithium silicate may be a form of LiₐSi_{b}O_{c} (2≤a≤4, 0<b≤2, 2≤c≤5). However, the present invention is not limited thereto.

In an exemplary embodiment of the present specification, the Li element may be included in an amount of 0.1 wt% to 20 wt% or 0.1 wt% to 10 wt% on the basis of 100 wt% of a total of the silicon-based active material. Specifically, the Li element may be included in an amount of 0.5 wt% to 8 wt%, and more specifically, 0.5 wt% to 4 wt%. When the above range is satisfied, the Li compound can be included in an appropriate content in the silicon-based active material, so the volume change of the negative electrode active material during charging and discharging of the battery can be easily suppressed, and the discharge capacity and initial efficiency of the battery can be improved.

The content of the Mg element or Li element can be confirmed through ICP analysis. For the ICP analysis, a predetermined amount (about 0.01 g) of a negative electrode active material is precisely aliquoted, transferred to a platinum crucible, and completely decomposed on a hot plate by adding nitric acid, hydrofluoric acid and sulfuric acid thereto. Then, by using an inductively coupled plasma atomic emission spectrometer (ICP-AES, Perkin-Elmer 7300), a reference calibration curve is obtained by measuring the intensity of a standard liquid, which has been prepared using a standard solution (5 mg/kg), at an intrinsic wavelength of the Mg element or Li element. Subsequently, a pre-treated sample solution and a blank sample are introduced into the spectrometer, and by measuring the intensity of each component to calculate an actual intensity, calculating the concentration of each component based on the obtained calibration curve, and then performing a conversion such that the sum of the calculated concentrations of the components is equal to a theoretical value, the Mg element or Li element content in the prepared silicon-based active material can be analyzed.

In an exemplary embodiment of the present specification, a carbon layer may be provided on a surface of the silicon-based composite particle and/or inside the pore. Conductivity is imparted to the silicon-based composite particle by the carbon layer, so that the initial efficiency, life characteristics, and battery capacity characteristics of a secondary battery including the negative electrode active material including the silicon-based composite particle can be improved. A total amount of the carbon layer included may be 5 wt% to 40 wt% on the basis of 100 wt% of a total of the silicon-based composite particle.

In an exemplary embodiment of the present specification, the carbon layer may include at least one of amorphous carbon or crystalline carbon.

An average particle diameter (D₅₀) of the silicon-based active material may be 2 µm to 15 µm, specifically 3 µm to 12 µm, and more specifically 4 µm to 10 µm. When the above range is satisfied, a side reaction between the silicon-based composite particle and the electrolyte solution is controlled, and the discharge capacity and initial efficiency of the battery can be effectively implemented.

In the present specification, the average particle diameter (D₅₀) may be defined as a particle diameter corresponding to 50% of the cumulative volume in the particle diameter distribution curve of particles. The average particle diameter (D₅₀) may be measured using, for example, a laser diffraction method. In the laser diffraction method, in general, particle diameters ranging from a submicron range to several millimeters can be measured, and results with high reproducibility and high resolvability can be obtained.

According to an exemplary embodiment of the present specification, the negative electrode slurry may further include an additional negative electrode active material, in addition to the silicon-based active material described above.

As the additional negative electrode active material, a compound capable of reversible intercalation and deintercalation of lithium may be used. Specific examples may include a metallic material capable of being alloyed with lithium, such as Si, Al, Sn, Pb, Zn, Bi, In, Mg, Ga, Cd, Si alloys, Sn alloys, or Al alloys; a metal oxide capable of doping and undoping lithium, such as SiO_{β}(0<β<2), SnO₂, vanadium oxide, lithium titanium oxide, and lithium vanadium oxide; a composite including the metallic material and a carbonaceous material, such as a Si-C composite or an SnC composite; a carbon-based active material, and the like, and any one thereof or a mixture of two or more thereof may be used. In addition, a metal lithium thin film may be used as the negative electrode active material.

In an exemplary embodiment of the present invention, a weight ratio of the silicon-based active material and the additional negative electrode active material included in the negative electrode slurry may be 1:99 to 90:10, and specifically 1:99 to 50:50.

In an exemplary embodiment of the present specification, the carbon-based active material can be used without particular limitation, and representative examples thereof may include crystalline carbon, amorphous carbon, or a combination thereof. Examples of the crystalline carbon may include graphite such as amorphous, plate-like, flake-like, spherical or fibrous natural graphite and artificial graphite, and examples of the amorphous carbon may include soft carbon (low-temperature fired carbon), hard carbon, mesophase pitch carbide, fired coke, and the like. The graphite may be natural graphite, artificial graphite, or a mixture thereof. The carbon-based active material may be included in an amount of 60 parts by weight or more and 99 parts by weight or less on the basis of 100 parts by weight of a total of the negative electrode active material included in the negative electrode active material layer.

In an exemplary embodiment of the present specification, the negative electrode active material in 100 parts by weight of the negative electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and most preferably 98 parts by weight or more and 99.9 parts by weight or less.

According to an additional exemplary embodiment of the present specification, the negative electrode active material layer may further include a negative electrode binder, in addition to the silicon-based active material and the carbon-based active material.

The negative electrode binder may serve to improve adhesion between particles of the negative electrode active material and adhesive force between particles of the negative electrode active material and the negative electrode current collector. For the negative electrode binder, those known in the art may be used. Non-limiting examples thereof may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The negative electrode binder may be included in an amount of 0.1 part by weight or more and 20 parts by weight or less, for example, preferably 0.3 part by weight or more and 20 parts by weight or less, and more preferably 0.5 part by weight or more and 10 parts by weight or less on the basis of 100 parts by weight of the negative electrode active material layer.

The negative electrode active material layer may not include a conductive material, but may further include a conductive material if necessary. The conductive material included in the negative electrode active material layer is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; fluorocarbon ; metal powders such as aluminum, and nickel powders; a conductive whisker such as zinc oxide and potassium titanate; a conductive metal oxide such as titanium oxide; a conductive material such as polyphenylene derivative, and the like may be used. A content of the conductive material in the negative electrode active material layer may be 0.01 part by weight to 20 parts by weight, and preferably 0.03 part by weight to 18 parts by weight on the basis of 100 parts by weight of the negative electrode active material layer.

In an exemplary embodiment of the present specification, a thickness of the negative electrode active material layer may be 10 µm or greater and 500 µm or less.

In an exemplary embodiment, the negative electrode current collector is not particularly limited as long as it has conductivity without causing a chemical change in the battery. For example, for the current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the current collector. A thickness of the current collector may be 1 µm to 500 µm. However, the thickness of the current collector is not limited thereto.

The positive electrode and the negative electrode can be manufactured according to a conventional method for manufacturing a positive electrode and a negative electrode, except using the positive and negative electrode active materials described above. Specifically, the electrode can be manufactured by applying a composition for active material layer formation, including the above-described active material and, optionally, a binder and a conductive material, onto a current collector, followed by drying and rolling. In this case, the types and contents of the positive electrode and negative electrode active materials, the binder, and the conductive material are as described above. The solvent may be a solvent commonly used in the art, such as dimethyl sulfoxide (DMSO), isopropyl alcohol, N-methylpyrrolidone (NMP), acetone, or water, and any one thereof or a mixture of two or more thereof may be used. A used amount of the solvent is sufficient if it can dissolve or disperse the active material, the conductive material, and the binder in consideration of an applied thickness of a composition and a manufacturing yield, and then, allows for a viscosity capable of exhibiting excellent thickness uniformity when applied to manufacture a positive electrode and a negative electrode. With another method, the positive electrode and the negative electrode may be manufactured by laminating, on a current collector, a film obtained by casting the composition for formation of an active material layer on a separate support and peeling off it from the support.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte solution as well as a low resistance against migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more species selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

A further exemplary embodiment of the present invention provides a battery module including the aforementioned lithium secondary battery as a unit cell, and a battery pack including the battery module. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Since the lithium secondary battery according to the exemplary embodiments of the present invention stably exhibits excellent discharge capacity, output characteristics, and cycle performance, the secondary battery can be used as a power source of a portable device such as a mobile phone, a laptop computer, and a digital camera as well as a medium to large sized device selected from the group consisting of an electric vehicle, a hybrid electric vehicle, a plug-in hybrid electric vehicle and a power storage system. For example, the battery module or battery pack may be used as a power source of a medium to large sized device of any one or more of a power tool; an electric vehicle including an electric vehicle (EV), a hybrid electric vehicle, and a plug-in hybrid electric vehicle (PHEV); or a power storage system.

### Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

### Examples 1 to 3

A positive electrode was prepared by coating, drying, and rolling a positive electrode active material layer on a positive electrode current collector. As a composition for preparing the positive electrode active material layer, a Ni-based positive electrode active material (Li_{1.0}Ni_{0.84}Co_{0.08}Mn_{0.08}O₂) having a cobalt oxide layer provided on a part of a surface of a particle, a conductive material (CNT), and a binder (PVDF) were added to a methylpyrrolidone (NMP) solvent at a weight ratio of 97:1:2 to prepare a positive electrode slurry (the solid of the positive electrode slurry is included in 70 parts by weight of the total positive electrode slurry).

The positive electrode slurry prepared above was applied on an Al current collector, which was then dried at high temperature and rolled at room temperature to prepare a positive electrode.

Here, the positive electrode active material includes the first positive electrode active material with D₅₀, the tap density, and the rolling density of the single particles in Table 1 below and the particle strength in Table 2 and the second positive electrode active material with D₅₀ and the particle strength in Table 2 below at a weight ratio of 6:4.

The tap density, the rolling density, and the particle strength were measured in the following manner.
* Tap density: A 300 cc container was charged with 10 g of the positive electrode active material obtained in each of Example 1 and Comparative Example 1, and then vibrated under certain conditions to measure the resulting apparent density of particles. Specifically, the tap density of the lithium transition metal oxide particles was measured using a tap density tester (KYT-5000, Seishin).
* Rolling density: The rolling density of the positive electrode active material (die area: 2.3 cm²) was measured using a powder resistance measuring device HPRM-1000 (HAN TECH CO.) when rolled with a force of 2,000 kgf/cm².
* Particle strength: After putting particles on a plate, a force when the particles were broken while increasing a compressive force was measured using a Micro Compression Testing Machine (Shimadzu, MCT-W500), and used as a particle strength value.

For a negative electrode current collector, a negative electrode slurry (the solid content of the negative electrode slurry was 50 parts by weight with respect to the total negative electrode slurry) was prepared by adding a negative electrode active material including SiO and graphite (SiO-based active material was included in an amount of 5 parts by weight with respect to the total negative electrode active material), a conductive material (carbon black), a binder (SBR) and a thickener (CMC) to a distilled water solvent at a weight ratio of 96:1:2:1.

The negative electrode slurry prepared above was applied on a Cu current collector, dried at high temperature and rolled at room temperature to prepare a negative electrode.

The positive electrode and the negative electrode were stacked with a separator interposed therebetween, and an electrolyte solution (1M LiPF₆, ethylene carbonate (EC)/ethyl methyl carbonate (EMC) (volume ratio 3/7), vinylene carbonate (VC)/propane sultone (PS) (included in amounts of 3 parts by weight and 1.5 parts by weight, respectively, based on 100 parts by weight of electrolyte)) was injected to prepare a lithium secondary battery.

The electrode density, rolling ratio, and degree of generation of fine powder of the positive electrode, and the 0.1 C efficiency and degree of generation of gas of the lithium secondary battery are shown in Table 2 below.

The electrode density, the rolling ratio, the degree of generation of fine powder, and the degree of generation of gas were measured by the following methods.
* Electrode density: electrode weight/(electrode thickness*electrode area)
   - electrode weight: slurry weight excluding aluminum foil weight
   - electrode thickness: slurry layer thickness excluding aluminum foil thickness
* Rolling ratio: [(thickness before rolling - aluminum foil thickness) - (thickness after rolling - aluminum foil thickness)]/(thickness before rolling - aluminum foil thickness)
* Generation of fine powder: For a positive electrode active material obtained by heat-treating a rolled electrode in an air atmosphere at 500°C for 5 hours, a volume-cumulative particle size distribution graph was obtained using Microtrac MT 3000, and then the cumulative volume of 1 µm or less was obtained.
* Generation of gas: An amount of gas generated after charging (0.05C-cut) the prepared cell with constant current/constant voltage (CC/CV) up to 4.2V at 0.33C and storing the same at high temperature (60°C) for 8 weeks was measured using gas chromatography (gc agilent 7890b).

### Comparative Example 1

The same procedure as in Example 1 was carried out, except that secondary particles rather than single particles were used as the first positive electrode active material and single particles with a strength of 149 MPa were used as the first positive electrode active material. The first positive electrode active material, which is a secondary particle, has D₅₀, the tap density and the rolling density of the secondary particle in Table 1 below.

### Comparative Example 2

The same procedure as in Example 1 was carried out, except that secondary particles with a strength of 121 MPa were used as the second positive electrode active material and single particles with a strength of 149 MPa were used as the first positive electrode active material.

### Comparative Example 3

The same procedure as in Example 1 was carried out, except that secondary particles with a strength of 121 MPa were used as the second positive electrode active material.

**[Table 1]**

| | Single particle of first positive electrode active material of Example 1 | Secondary particle of first positive electrode active material of Comparative Example 1 |
|---|---|---|
| D₅₀ (µm) | 4 | 4 |
| Tap density (g/cc) | 2.4 | 1.6 |
| Rolling density (g/cc) | 3.3 | 2.4 |

As shown in Table 1, it can be confirmed that even when D₅₀ is the same, the single particle has the tap density and rolling density higher than those of the secondary particle.

**[Table 2]**

| | Exampl e 1 | Exampl e 2 | Exampl e 3 | Comparati ve Example 1 | Comparati ve Example 2 | Comparati ve Example 3 |
|---|---|---|---|---|---|---|
| D₅₀ (µm) (second positive electrod e active material / first positive electrod e active material ) | 12/4 | 12/4 | 12/4 | 12/4 | 12/4 | 12/4 |
| Particle strength (MPa) (second positive electrod e active material / first positive electrod e active material ) | 269/18 1 | 168/18 1 | 232/18 1 | 269/149 | 121/149 | 121/181 |
| Electrod e density (g/cc) | 3.49 | 3.48 | 3.51 | 3.32 | 3.41 | 3.33 |
| Rolling ratio (%) | 27.8 | 28.6 | 27.9 | 35.6 | 26.5 | 27.1 |
| Generati on of fine powder (particl e with particle diameter of 1 µm or less) (vol%) | 0.34 | 4.7 | 0.31 | 11.7 | 8.5 | 7.6 |
| 0.1 C efficien cy (%) | 88.3 | 91.2 | 88.1 | 92.8 | 92.5 | 91.4 |
| Generati on of gas (@ 8 weeks) | 0.58 | 0.77 | 0.52 | 1.13 | 0.99 | 0.95 |

Since the first positive electrode active materials of Example 1 and Comparative Example 1 were single particles and secondary particles, respectively, a difference in tap density between the first positive electrode active materials occurred as shown in Table 1, and as a result, the coating thicknesses, before rolling, of the first positive electrode active material layers coated with the same loading amount became different, leading to a difference in rolling ratio when rolled to the final target thickness. That is, when single particles are used as the first positive electrode active material, as in Example 1, the tap density is excellent and the coating thickness of the first positive electrode active material layer is thin, so the rolling ratio for rolling to the target thickness can be improved.

In Examples 2 and 3, the particle sizes of the first and second positive electrode active materials were the same but the particle strengths were different, as compared with Example 1. The second positive electrode active materials of Examples 2 and 3 have different particle strengths from that of the second positive electrode active material of Example 1, were prepared under different firing conditions from those of Example 1, and had relatively lower tap densities than that of the second positive electrode active material of Example 1, so there was a slight difference in rolling ratio.

As shown in Table 2, it could be confirmed that in Examples 1 to 3, the fine powder was less generated, the efficiency was lower, and the generation of gas was greatly reduced, as compared with Comparative Examples 1 to 3.

Comparative Example 1 corresponds to the case where secondary particles were used as the first positive electrode active material. Compared to the case where single particles were used, it can be confirmed that the tap density was relatively low, so rolling was not performed properly, resulting in generation of more fine powder and gas, as compared with Examples 1 to 3.

Comparative Examples 2 and 3 correspond to cases where the particle strength of the second positive electrode active material is less than 150 MPa, and it can be confirmed that the particle strength of the second positive electrode active material was weak and breakage occurred during rolling, resulting in generation of more fine powder and gas, as compared with Examples 1 to 3.

## Claims

1. A positive electrode composition comprising:
a first positive electrode active material in the form of a single particle;
a second positive electrode active material having a particle diameter larger than that of the first positive electrode active material and a particle strength of 150 MPa or higher;
a binder; and
a conductive material.

2. The positive electrode composition of claim 1,
wherein the second positive electrode active material is in the form of a secondary particle.

3. The positive electrode composition of claim 1,
wherein D₅₀ of the first positive electrode active material is 1 µm to 10 µm, and D₅₀ of the second positive electrode active material is 8 µm to 20 µm.

4. The positive electrode composition of claim 1,
wherein the first positive electrode active material has a tap density of 2 g/cc or higher.

5. The positive electrode composition of claim 1,
wherein the first positive electrode active material has a rolling density of 3 g/cc or higher.

6. The positive electrode composition of claim 1,
wherein the first positive electrode active material has a particle strength of 150 MPa or higher.

7. The positive electrode composition of claim 1,
wherein a weight ratio of the first positive electrode active material and the second positive electrode active material is 1:9 to 9:1.

8. A positive electrode for a secondary battery comprising:
a current collector; and
a positive electrode active material layer provided on the current collector and comprising the positive electrode composition of any one of claims 1 to 7.

9. The positive electrode of claim 8, wherein fine powder having a particle diameter of 1 µm or less in the positive electrode active material layer is 5 vol% or less on the basis of 100 vol% of the positive electrode active material layer.

10. A secondary battery comprising:
the positive electrode of claim 8;
a negative electrode; and
a separator.

11. The secondary battery of claim 10, wherein the negative electrode comprises a silicon-based active material.

12. The secondary battery of claim 11, wherein the negative electrode further comprises a carbon-based active material.
